Europäisches Patentamt

European Patent Office

Office européen des brevets

(11) Publication number: **0 284 379 B1**

# EUROPEAN PATENT SPECIFICATION

(45) Date of publication of patent specification: **30.12.92**

(51) Int. Cl.⁵: **C08L 77/00**, C08L 23/08, C08J 3/22, //(C08L77/00,23:08)

(21) Application number: **88302580.1**

(22) Date of filing: **24.03.88**

The file contains technical information submitted after the application was filed and not included in this specification

(54) **Process for producing polymeric polyamide resin composition.**

(30) Priority: **24.03.87 JP 70944/87**

(43) Date of publication of application:
**28.09.88 Bulletin 88/39**

(45) Publication of the grant of the patent:
**30.12.92 Bulletin 92/53**

(84) Designated Contracting States:
**DE FR GB IT NL**

(56) References cited:
**EP-A- 0 072 480
EP-A- 0 186 790
EP-A- 0 191 548
EP-A- 0 234 819**

**PATENT ABSTRACTS OF JAPAN, vol. 10, no. 85 (C-336) (2142) 4th April 1986; & JP-A-60 219 257**

**PATENT ABSTRACTS OF JAPAN, vol. 11, no. 150 (C-422) (2597) 15th May 1987; & JP-A-61 283 653**

(73) Proprietor: **SUMITOMO CHEMICAL COMPANY, LIMITED**
**Kitahama 4-chome 5-33
Chuo-ku Osaka 541(JP)**

(72) Inventor: **Ohmae, Tadayuki**
**6-10-2-409, Inagehigashi
Chiba-shi Chiba(JP)**
Inventor: **Toyoshima, Yoshiki**
**832-4, Shiizu
Ichihara-shi Chiba(JP)**
Inventor: **Mashita, Kentaro**
**4-9-3, Aobadai
Ichihara-shi Chiba(JP)**
Inventor: **Nambu, Jinsho**
**1-9, Yushudainischi
Ichihara-shi Chiba(JP)**

(74) Representative: **Diamond, Bryan Clive et al
Gee & Co., Chancery House, Chancery Lane
London WC2A 1OU(GB)**

**Description**

The present invention relates to a process for producing a polyamide resin composition which can be molded into moldings, sheets or films by injection molding or extrusion molding. More particularly, it is concerned with a process for producing a polyamide resin composition which is excellent in impact resistance and possesses a good physical property balance, by melt kneading a polyamide resin and an ethylene copolymer having an acid anhydride group by a specific compounding method.

A polyamide resin is widely used as an engineering plastic because of its excellent stiffness, abrasion resistance, chemical resistance, heat resistance and electrical characteristics.

The polyamide resin, however, is not satisfactory in impact resistance, mold stability and so on and, thus, it is limited in use because of such unsatisfactory properties.

In order to improve poor impact resistance which is one of the defects of the polyamide resin, various methods have been proposed.

For example, a method of adding a modified ethylene copolymer type polymer having an active group capable of reacting with a polyamide resin and having rubber elasticity is disclosed in, for example, Japanese Patent Publications Nos. 4743/79 and 44108/80 and Japanese Patent Application (OPI) No. 23850/83 (the term "OPI" as used herein means a "published unexamined patent application").

It has been revealed, however, that the impact resistance of a molding produced by the above method is improved to a certain extent but is not yet satisfactory. Moreover it has been revealed that the molding produced by the above method is not satisfactory from the viewpoint of its balance in physical properties such as heat resistance, stiffness and impact resistance.

That is, even though the modified polyamide resin produced by the above method possesses impact resistance and flexibility improved to a certain extent, its mechanical properties such as stiffness, tensile strength, hardness and heat resistance are much inferior to those of the original polyamide resin. Moreover, in many cases, there is obtained a molding which is colored and thus has a poor appearance, and thus its use is limited.

The present invention is intended to improve poor impact resistance of a polyamide resin which is one of the defects of the polyamide resin, without impairing its mechanical properties such as heat resistance and stiffness, by melt kneading an ethylene copolymer having a specified structure by a specific compounding method. That is, an object of the present invention is to provide a process for producing a polyamide resin composition containing a polyamide resin as a major component, which is excellent in impact resistance and also in mechanical properties such as heat resistance and stiffness.

It has been found that if a polyamide resin and an ethylene copolymer having a specified structure are melt kneaded by a specific compounding method, there can be obtained a composition which is good in balance among impact resistance, heat resistance and stiffness and also excellent in moldability and gives rise to a molding having a good appearance.

The present invention relates to a process of producing a polyamide resin composition having excellent impact resistance, which process comprises melt kneading (A) 20 to 60 parts by weight of a polyamide resin and (B) 40 to 80 parts by weight of an ethylene copolymer comprising (a) 40 to 90% by weight of an ethylene unit, (b) at least 5% by weight of an $\alpha,\beta$-unsaturated carboxylic acid alkyl ester unit and (c) 0.3 to 10% by weight of a maleic anhydride unit, provided that the ethylene copolymer (B) is used in a greater amount than the polyamide resin (A) or an ethylene copolymer (B) having a smaller melt viscosity than the polyamide resin (A) is used, so as to form a partially crosslinked composition (I) wherein the ethylene copolymer is a continuous phase; and further melt kneading 100 parts by weight of a first component comprising said composition (I) and 50 to 1,000 parts by weight of a second component consisting of a polyamide resin.

As the polyamide resin to be used in the component (A) of the first component and the polyamide resin as the second component, various polyamides as obtained by polycondensation of three or more-membered lactams, polymerizable $\omega$-amino acids, dibasic acids and diamines can be used.

More specifically, polymers of $\epsilon$-caprolactam, aminocaproic acid, enantholactam, 7-aminoheptanoic acid, and 11-aminoundecanoic acid; polymers resulting from polybondensation of diamines such as butanediamine, hexamethylenediamine, nonamethylenediamine, undecamethylenediamine, dodecamethylenediamine and m-xylenediamine and dicarboxylic acids such as terephthalic acid, isophthalic acid, adipic acid, sebacic acid, dodecane dibasic acid and glutaric acid, and their copolymers can be used.

Representative examples are aliphatic polyamide resins such as polyamide 46, polyamide 6, polyamide 66, polyamide 610, polyamide 11, polyamide 12 and polyamide 612, and aromatic polyamide resins such as polyhexamethylenediamine terephthalamide, polyhexamethylene isophthalamide and xylene group-containing polyamides.

Of these resins, polyamide 6, polyamide 66 and polyamide 12 are particularly preferred.

Various commercially available copolymer nylon resins having a melting point of 80 to 200°C, such as a hot melt adhesive, can be used alone or in combination with polyamides having a melting point of at least 200°C.

The polyamide resin in the component (A) of the first component and the polyamide resin as the second component may be the same or different.

The ethylene copolymer as the component (B) constituting the resin composition of the present invention comprises 40 to 90% by weight, preferably at least 65% by weight of an ethylene unit (a), 5 to 60% by weight, preferably at least 10% by weight of an $\alpha,\beta$-unsaturated carboxylic acid alkyl ester unit (b) and 0.3 to 10% by weight, preferably 1 to 5% by weight of a maleic anhydride unit (c).

The $\alpha,\beta$-unsaturated carboxylic alkyl ester as the monomer component (b) is an alkyl ester of an unsaturated carboxylic acid having 3 to 8 carbon atoms (such as acrylic acid and methacrylic acid). Representative examples are methyl acrylate, ethyl acrylate, n-propyl acrylate, isopropyl acrylate, n-butyl acrylate, tert-butyl acrylate, isobutyl acrylate, methyl methacrylate, ethyl methacrylate, n-propyl methacrylate, isopropyl methacrylate, n-butyl methacrylate, and isobutyl methacrylate. Of these compounds, methyl acrylate, ethyl acrylate, n-butyl acrylate and methyl methacrylate are particularly preferred.

Ethylene copolymers obtained by copolymerizing other copolymerizable monomers such as vinyl acetate and vinyl propionate can be included within the range that does not reduce the performance of the composition.

If the proportion of the ethylene unit (a) in the ethylene copolymer (B) is less than 40% by weight, the resulting composition is seriously decreased in stiffness. On the other hand, if it is in excess of 90% by weight, impact resistance is decreased, and the desired results cannot be obtained. If the proportion of the $\alpha,\beta$-unsaturated carboxylic acid alkyl ester unit (b) is less than 5% by weight, the effect of improving impact resistance is small. On the other hand, if it is in excess of 60% by weight, stiffness is seriously decreased. Moreover, if the proportion of the maleic anhydride unit (c) is less than 0.3% by weight, impact resistance is not satisfactorily improved. On the other hand, if it is in excess of 10% by weight, moldability is not satisfactory.

The melt index (JIS K6760) of the ethylene copolymer (B) is 1 to 100 g/10 min and preferably 2 to 50 g/10 min. If the melt index is in excess of 100 g/10 min, the resulting composition is not satisfactory in mechanical properties. On the other hand, if it is less than 1 g/10 min, compatibility with polyamide is poor.

In the present invention, the first component is preferred to be a component consisting of a composition (II) obtained by adding to 100 parts by weight of the composition (I), (C) 0.01 to 20 parts by weight of a polyfunctional compound containing at least two functional groups which are reactive with a carboxyl group, a carboxylic acid anhydride group and an amino group in the molecule thereof and by partially crosslinking the resulting mixture by melt kneading.

The particular polyfunctional component (C) optionally used in the process is not critical as long as it is a compound having intermolecular crosslinking reactivity with the ethylene copolymer (B) and the polyamide resin (A).

The polyfunctional compound as the component (C) includes compounds containing at least two functional groups selected from an amino group, an epoxy group, a dihydroxazolyl group, a carboxyl group, a carboxylic acid anhyride group and a hydroxyl group in the molecule therof. The molecular weight of the polyfunctional compound (C) is not critical, and it can be a high molecular weight compound.

Representative examples of the compound containing at least two amino groups in the molecule thereof as the component (C) are shown below.

Aliphatic diamines such as 1,6-hexamethylene-diamine, trimethylhexamethylene diamine, 1,4-diaminobutane, 1,3-diaminopropane, ethylene diamine or a polyether diamine; aliphatic diamine carbamates such as hexamethylenediamine carbamate or ethylene diamine carbamate; aliphatic polyamines such as diethylenetriamine, triethylenetetramine, tetraethylenepentamine, pentaethylenehexamine, ethylaminoethylamine, methylaminopropylamine, 2-hydroxyethylaminopropylamine, aminoethylethanolamine, 1,3-bis(3-aminopropoxy)-2,2-dimethylpropane, 1,3,6-tris-aminomethylhexane, iminobispropylamine, methyliminobispropylamine or bis(hexamethylene)triamine; alicyclic polyamines such as menthanediamine, N-aminoethylpiperazine, 1,3-diaminocyclohexane, isophoronediamine, and bis(4-amino-3-methylcyclohexyl)methane; aromatic ring-containing aliphatic polyamines such as m-xylylenediamine or tetrachloro-p-xylylenediamine aromatic amines such as m-phenylenediamine, diaminodiphenyl ether, 4,4'-methylenedianiline, diaminodiphenylsulfone, benzidine, 4,4'-bis(o-toluidine), 4,4'-thiodianiline, o-phenylenediamine, dianisidine, methylenebis(o-chloroaniline), 2,4-toluenediamine, bis(3,4-diaminophenyl)-sulfone, diaminoditolylsulfone, 4-chloro-o-phenylenediamine, 4-methoxy-6-methyl-m-phenylenediamine or m-aminobenzylamine silicon-containing polyamines such as 1,3-bis($\gamma$-aminopropyl)-1,1,3,3-tetramethyldisiloxane amine-modified silicone oils; a butadiene-acrylontrile copolymer whose terminal functional group is an amine; tertiary amine compounds such as N,N,N',N'-tetramethylhexamethylenediamine or N,N,N',N'',N''-pentamethyldiethylenetriamine; an ethylene copolymer comprising an ethylene unit and an $\alpha,\beta$-unsaturated carboxylic acid N,N-dialkylaminoalkyl ester unit such as a copolymer of ethylene and N,N-dimethylaminoethyl methacrylate; an ethylene copolymer comprising an ethylene unit and an $\alpha,\beta$-unsaturated carboxylic acid amide unit such as a copolymer of ethylene and N,N-dimethylaminopropylacrylamide; dihydrazide compounds such as succinic acid dihyrazide, adipic acid dihydrazide, isophthalic acid dihydrazide, eicosanedicarboxylic acid dihydrazide; diaminomalonitrile and melamine.

Representative examples of the compound containing at least two epoxy groups in the molecule thereof as the component (C) are shown below. They are widely divided into epoxy group-containing olefin copolymers and so-called epoxy compounds.

Examples of the olefins of epoxy group-containing olefin copolymers include ethylene, propylene, butene-1, isobutylene, pentene-1, hexene-1, heptene-1, octene-1 or dodecene-1. Of these compounds, ethylene is particularly preferred.

Preferred examples of the epoxy group-containing olefin copolymers include ethylene copolymers comprising an ethylene unit and an $\alpha,\beta$-unsaturated carboxylic acid glycidyl unit, ethylene copolymers comprising an ethylene unit, an $\alpha,\beta$-unsaturated carboxylic acid glycidyl unit and an $\alpha,\beta$-unsaturated carboxylic acid alkyl ester unit, and ethylene copolymers comprising an ethylene unit, an $\alpha,\beta$-unsaturated carboxylic acid glycidyl unit and a carboxylic acid vinyl ester unit. In addition, as the copolymer component, $\alpha,\beta$-unsaturated carboxylic acid alkyl esters and carboxylic acid vinyl esters may be contained. Examples are alkyl esters of acrylic or methacrylic acid. Specific examples are methyl acrylate, ethyl acrylate, n-butyl acrylate, methyl methacrylate, vinyl acetate and vinyl propionate. In addition, glycidyl methacrylate-modified ethylene-propylene rubber and ethylene-methyl acrylate-glycidyl methacrylate copolymer rubber can be used.

With regard to the polymerization method, copolymers produced by any of random copolymerization, block copolymerization and graft copolymerization can be used. The glycidyl methacrylate and/or glycidyl acrylate unit content of the olefin copolymer is from 5 to 50% by weight. Outside this range, the effect of improving physical properties of the present invention is insufficient.

As the epoxy compound, the glycidyl ethers of bisphenols such as bisphenol A, resorcinol and hydroquinone, or halogenated bisphenols thereof can be used. Of these, epoxy resins are suitable.

These epoxy compounds are used singly or as mixtures comprising two or more thereof.

In general, the epoxy compound is compounded with a curing agent, such as amines, acid anhydrides, poly-mercaptans, and phenol resins. In the present invention, it is usual that the curing agent is not used at all. However, if the amount of active hydrogen is equimolar to or less than the epoxy group component, the curing agent may be used.

Examples of the epoxy resin include a bisphenol A-based epoxy resin, a bisphenol F-based epoxy resin, a novolak type epoxy resin, an alicyclic epoxy resin, a glycidyl ester-based resin, a glycidylamine-based resin, a hydantoin-type epoxy resin, triglycidyl isocyanurate and the like.

Examples of the compound containing at least two dihydroxazolyl groups in the molecule thereof include 2,2'-(1,3-phenylene)-bis(2-oxazoline) and a copolymer of styrene and vinyl oxazoline.

As the compounds containing at least two carboxyl groups, carboxylic acid anhydride groups or hydroxyl groups in the molecule thereof as the component (C), terephthalic acid, isophthalic acid, adipic acid, sebacic acid, dodecane dibasic acid, a copolymer of ethylene and acrylic acid, trimellitic acid anhydride, pyromellitic acid anhydride, ethylene glycol bis(anhydrotrimellitate), a copolymer of isobutylene and maleic anhyride, a copolymer of styrene and maleic anhydride, trimethylolpropane, pentaerythritol, a saponified product of a copolymer of ethylene and vinyl acetate, and the like can be used.

In the polyamide resin composition of the present invention, the amount of the polyamide resin as the component (A) of the first component is 20 to 60 parts by weight, and the amount of the ethylene copolymer as the component (B) of the first component is 40 to 80 parts by weight. If the amount of the polyamide resin component (A) is less than 20 parts by weight, stiffness and heat resistance are insufficient. On the other hand, if it is more than 60 parts by weight, good results cannot be obtained in respect of impact resistance.

The amount of the polyamide resin as the second component of the present invention to be added is 50 to 1,000 parts by weight. If the amount is less than 50 parts by weight, stiffness and heat resistance are not sufficiently high. On the other hand, if it is more than 1,000 parts by weight, good results cannot be obtained in respect of impact resistance.

The amount of the polyfunctional compound as the component (C) which is optionally added has to be selected depending on the reactivity of the functional groups of the polyfunctional compound to a carboxyl group, a carboxylic acid anhydride group and an amino group. The amount of the polyfunctional compound added is 0.01 to 20 parts by weight per 100 parts by weight of the total weight of the polyamide resin component (A) and the ethylene copolymer component (B). If the amount is less than 0.01 part by weight, the effect of improving mechanical properties such as heat resistance, stiffness and the like is small. On the other hand, if it is more than 20 parts by weight, there is no further effect of the polyfunctional compound

The present process requires kneading the components in a molten state. The compounding method comprises adding the polyamide resin as the second component to the partially crosslinked composition (I) which is prepared by melt kneading the polyamide resin component (A) and the ethylene copolymer component (B) or to the composition (II) which is prepared by further adding the polyfunctional compound (C) to the composition (I) and partially crosslinking the resulting mixture by melt kneading.

The polyamide resin composition of the present invention is very good in balance among physical properties of a molding, such as mechanical properties, e.g., impact resistance and thermal properties. In particular, by adding the polyamide resin as the second component at a later stage and melt kneading the resulting mixture, stiffness is increased, melt index is increased and moldability is improved.

The reason why a marked physical property improving effect can be obtained by melt kneading by the above specified compounding method is considered to be that proper crosslinking produces the micro dispersion state of polymer having good physical properties. That is, the composition (I) in which the polyamide resin component (A) is a dispersed phase and the ethylene copolymer component (B) is a continuous phase is prepared by melt kneading the polyamide resin component (A) and the ethylene copolymer component (B) and, thereafter, by melt kneading the polyamide resin as the second component at a later stage, the phase conversion is inhibited and the polyamide resin as the second component is made a continuous matrix phase.

As a result, there is formed a multi dispersion state wherein the ethylene copolymer phase containing the polyamide resin particles is dispersed in the second polyamide resin, and this dispersion state is similar to that in impact resistant polystyrene and is considered to be a dispersion state producing excellent physical properties.

The shape and size of the ethylene copolymer phase are not materially limited. In this sense, this is a novel technical concept clearly distinguishable from the prior art technical concept that if the particle diameter of the rubber dispersion phase, such as the ethylene copolymer component, is small, for example, 1 $\mu$m or less, the improving effect is good to a certain extent (Japanese Patent Publication No. 44108/80 and Japanese Patent Application (OPI) No. 163960/86).

In obtaining the micro dispersion state of the present invention, there is employed a general principle that as the melt viscosity is low and the volume is large, the component is more easily converted into a continuous phase. That is, in preparation of the composition (I), in order to make the ethylene copolymer component a continuous phase, it is necessary that the ethylene copolymer component (B) is used in a greater amount than the polyamide resin component (A), or the ethylene copolymer component (B) having a smaller melt viscosity than the polyamide resin component (A) is used.

In melt kneading the two components, a crosslinking reaction partially occurs, and there is formed the composition (I) having a considerably increased melt viscosity. In the composition (II) obtained by partially crosslinking the composition (I) with the polyfunctional compound component (C) by melt kneading, the melt viscosity is more increased. At the subsequent step, the polyamide resin as the second component is melt kneaded. Ethylene copolymer particles containing polyamide resin particles are dispersed in the polyamide resin matrix of the second component without causing phase reversion, because the melt viscosity of the composition (I) or (II) is high.

In general, if heat distortion resistance is improved, stiffness tends to increase and impact resistance tends to be lowered. On the other hand, in the composition of the present invention, heat resistance and impact resistance are improved with a good balance without reducing other physical properties. This is an unexpected effect.

Melt kneading can be carried out by the use of commonly used equipment, such as various extruders, e.g., single- or twin-screw extruders, and kneading units, e.g., a Banbury mixer, rolls, and various kneaders.

In melt kneading the polyamide resin as the second component of the present invention, for example, the first component comprising the melt kneaded composition of the polyamide resin component (A) and the ethylene copolymer component (B) is once granulated, and then the polyamide resin as the second component is added and the resulting mixture is again melt kneaded in the extruder. It is preferred that the melt kneaded composition of the polyamide resin component (A) and the ethylene copolymer component (B) is produced in the earlier stage (front unit) of an extruder equipped with a side feeder and in the later stage (back unit) of the same extruder as above, the polyamide resin as the second component in a molten or solid state is added through the side feeder, and the resulting mixture is melt kneaded.

By the present process, the object of the present invention can be attained by simple melt kneading using an injection molding machine. That is, moldings having good physical properties can be obtained by mixing granulated pellets of the composition (I) or composition (II) as the first component and the polyamide resin as the second component by the dry blend method, and directly injection molding the resulting mixture.

When melt kneading the polyfunctional compound component (C) in the present invention, the melt kneaded composition of the polyamide resin component (A) and the ethylene copolymer component (B) is once granulated, the polyfunctional compound component (C) is then added, and the resulting mixture is again melt kneaded by the use of the extruder. It is preferred that the melt kneaded composition of the polyamide resin component (A) and the ethylene copolymer component (B) is produced at the earlier stage (front unit) of an extruder equipped with a side feeder and at the later stage (back unit) of the same extruder as above, the polyfunctional compound component (C) in a molten or solid state is added and melt kneaded.

It is also preferred that the polyfunctional compound component (C) and a resin inert to the polyfunctional compound component (C) are previously melt kneaded to produce a master batch, and at the time of producing the thermoplastic resin composition of the present invention, a suitable amount of the master batch is added and melt kneaded.

In the melt kneading step, it is preferred that each resin component be uniformly mixed in a unit such as a tumbler or a Henschel mixer in the form of powder or pellet. If necessary, there can be employed a method in which the process of mixing is omitted and the components are independently quantitatively fed to a kneading unit.

To the resin composition of the present invention can be compounded other components, e.g., additives such as a pigment, a dye, a reinforcing agent, a filler, a heat stabilizer, an antioxidant, a weathering agent, a nucleating agent, a lubricant, an antistatic agent, a flame retardant and a plasticizer, and other polymers unless moldability and physical properties are thereby deteriorated.

In particular, addition of a reinforcing agent or filler, such as glass fibers or carbon fibers subjected to various surface treatment, talc, and calcium carbonate produces a material which has high stiffness and impact resistance and thus is greatly useful.

The kneaded resin composition of the present invention is molded by various molding techniques such as injection molding and extrusion molding.

The present invention is explained in greater detail with reference to the following examples, although it is not limited thereto.

The testing methods in the examples are as follows:

Flexural modulus: Measured according to JIS K7203 (sample thickness: 3.2 mm: measuring temperature: 23°C).

Izod Impact Strength: Measured according to JIS K7110 (sample thickness: 3.2 mm: measuring temperature: 23°C and -40°C: V-notched)

Heat Distortion Temperature: Measured according to JIS K7207 (sample thickness: 3.2 mm: bending stress: 4.6 kgf/cm$^2$).

Melt Index: Measured according to JIS K6760 (190°C, 230°C or 280°C, 2,160 g).

In the following examples and comparative examples, the following polyamide resins, ethylene copolymers and polyfunctional compounds were used.

Polyamide Resin

(1) Polyamide 66: Maranyl® A 125 (produced by Unitika Ltd.), $ML_{280°C} = 68$ g/10 min
(2) Polyamide 6: A1030BRL (produced by Unitika Ltd.), $MI_{230°C} = 34$ g/10 min

Ethylene Copolymer

The ethylene copolymers as described below can be produced by the methods described in French Patent No. 1,323,379 and French Patent Application No. 81/01,430.
(1) Copolymer (1)
    E/EA/MAH = 66.8/32.0/1.2 wt%, $MI_{190°C}$ = 7 g/10 min, $MI_{280°C}$ = 120 g/10 min
(2) Copolymer (2)
    E/EA/MAH = 71.9/25.0/3.1 wt%, $MI_{190°C}$ = 33 g/10 min, $MI_{280°C}$ = 230 g/10 min
(3) Ethylene Copolymer (3)

6

E/MA/MAH = 70.2/27.8/2.0 wt%, $MI_{190°C}$ = 15 g/10 min, $MI_{280°C}$ = 180 g/10 min
E: ethylene: EA: ethyl acrylate: MA: methyl acrylate: MAH: maleic anhydride: MI: melt index
The index means a test temperature.

Polyfunctional Compound

(1) Bondfast® E (produced by Sumitomo Chemical Co., Ltd.), ethylene/glycidyl methacrylate (88/12 wt%) copolymer, $MI_{190°C}$ = 3 g/10 min
(2) MB-1

Master batch produced by melt kneading 3 parts by weight of 2,2'-(1,3-phenylene)-bis(2-oxazoline) and 97 parts by weight of ethylene-propylene rubber E-120P (produced by Sumitomo Chemical Co., Ltd.) at 200ºC by the use of a 30 mm$\phi$ vented single-screw extruder.

EXAMPLES 1 AND 7

The components (A) and (B) shown in Table 1 were melt kneaded at a predetermined temperature (270°C for polyamide 66, 240°C for polyamide 6) by the use of a vented 30 mm$\phi$ single-screw extruder to obtain a composition (I).

While melt kneading the second component shown in Table 1 at a predetermined temperature (270°C for polyamide 66, 240°C for polyamide 6) by the use of a 30 mm$\phi$ single-screw extruder equipped with a side feed and a vent unit, the composition (I) was quantitatively added through the side feed unit provided at an intermediate point of the extruder barrel, and the resulting mixture was melt kneaded to obtain a resin composition.

The melt index of each of the composition (I) and the resin composition is shown in Table 1.

Each resin composition was dried at 80°C for 12 hours and then molded at a predetermined temperature (290°C for polyamide 66 and 260°C for polyamide 6) and a mold temperature of 70°C by the use of a 10 oz. injection molding machine (manufactured by Toshiba Corp., Model IS-150-V) to produce a test specimen for measurement of physical properties.

The flexural modulus, Izod impact resistance and heat distortion temperature of the test specimens obtained are shown in Table 1.

EXAMPLE 2 TO 6 AND 8

The components (A) and (B) shown in Table 1 were melt kneaded at a predetermined temperature (270°C for polyamide 66 and 240°C for polyamide 6) by the use of a 30 mm$\phi$ single-screw extruder provided with a vent unit to obtain a composition (I).

This composition (I) was mixed with the component (C) shown in Table 1 and melt kneaded at a predetermined temperature (270°C for polyamide 66 and 240°C for polyamide 6) by the use of the same single-screw extruder as used above to obtain a composition (II).

While melt kneading the second component shown in Table 1 at a predetermined temperature (270°C for polyamide 66 and 240°C for polyamide 6) by the use of a 44 mm$\phi$ twin-screw extruder equipped with a side feed unit and a vent unit, the composition (II) was added quantitatively through the side feed unit provided at an intermediate point of the extruder barrel, and the resulting mixture was melt kneaded obtain a resin composition.

The melt index of each of the composition (II) and the resin composition is shown in Table 1.

Each resin composition was evaluated in the same manner as in Example 1. The results are shown in Table 1.

COMPARATIVE EXAMPLES 1 AND 9

The components (A) and (B) shown in Table 2 were melt kneaded at a predetermined temperature (270°C for polyamide 66 and 240°C for polyamide 6) by the use of a 30 mm$\phi$ single-screw extruder equipped with a vent unit to obtain a resin composition.

Each resin composition was evaluated in the same manner as in Example 1. The results are shown in Table 2.

The compositions were inferior in fluidity, stiffness and heat distortion temperature to those of Examples 1 and 7.

7

COMPARATIVE EXAMPLES 2, 5 TO 7 AND 10

The components (A) and (B) shown in Table 2 were melt kneaded at a predetermined temperature (270°C for polyamide 66 and 240°C for polyamide 6) by the use of a 30 mmφ single-screw extruder equipped with a vent unit to obtain a composition.

This composition was mixed with the component (C) shown in Table 2 and melt kneaded at a predetermined temperature (270°C for polyamide 66 and 240°C for polyamide 6) by the use of a 44 mmφ twin-screw extruder equipped with a vent unit to obtain a resin composition.

Each resin composition was evaluated in the same manner as in Example 11 The results are shown in Table 2.

The compositions were inferior in fluidity, stiffness and heat distortion temperature to those of Examples 2 to 5 and 8.

COMPARATIVE EXAMPLE 3

The components (A), (B) and (C) shown in Table 2 were mixed at the same time and melt kneaded at 270°C by the use of a 44 mmφ twin-screw extruder equipped with a vent unit to obtain a resin composition.

The resin composition was evaluated in the same manner as in Example 1. The results are shown in Table 2.

The composition was inferior in Izod impact resistance to that of Example 2.

COMPARATIVE EXAMPLE 4

The components (A) and (C) shown in Table 2 were melt kneaded at 270°C by the use of a 30 mmφ single-screw extruder equipped with a vent unit to obtain a composition.

While melt kneading the second component shown in Table 2 at 270°C by the use of a 44 mmφ twin-screw extruder equipped with a side feed unit and a vent unit, the above composition was added quantitatively through the side feed unit provided at an intermediate point of the extruder barrel to obtain a resin composition.

This resin composition was evaluated in the same manner as in Example 1. The results are shown in Table 2.

The resin composition was inferior in Izod impact resistance to that of Example 2.

COMPARATIVE EXAMPLES 8 AND 11

Polyamide 66 or polyamide 6 was molded in the same manner as in Example 1 and measured for physical properties. The results are shown in Table 2.

TABLE 1

| | First Component | | | MI 280°C 2160 g (g/10 min) | Second Component (parts by weight) | MI 260°C 2160 g of Polyamide Resin Composition (g/10 min) | Flexural Modulus (kg/cm²) | Izod Impact Resistance (kg·cm/cm) | | Heat Distortion Temperature (4.6 kg/cm²) (°C) |
| Run No. | Component (A) (parts by weight | Component (B) (parts by weight | Component (C) (parts by weight | | | | | 23°C | -40°C | |
|---|---|---|---|---|---|---|---|---|---|---|
| Example 1 | polyamide 66 40 | copolymer (1) 60 | - | 9 | polyamide 66 200 | 35 | 20500 | NB | 13 | 181 |
| Example 2 | " 40 | " 50 | Bondfast® E 10 | 0.2 | " 200 | 25 | 19800 | NB | 12 | 212 |
| Example 3 | " 40 | copolymer (2) 50 | " 10 | 0.1 | " 200 | 13 | 19800 | NB | 11 | 206 |
| Example 4 | " 40 | copolymer (3) 50 | " 10 | 0.2 | " 200 | 18 | 19900 | NB | 12 | 209 |
| Example 5 | " 40 | copolymer (1) 60 | " 30 | 0.1 | " 170 | 13 | 15500 | NB | 23 | 175 |
| Example 6 | " 40 | " 50 | MB-1 10 | 5 | " 200 | 30 | 19100 | NB | 11 | 208 |
| Example 7 | Polyamide 6 40 | copolymer (2) 60 | - | 7 | polyamide 6 200 | 15 | 20100 | 9 | 6 | 175 |
| Example 8 | " 40 | " 50 | Bondfast® E 10 | 0.1 | " 200 | 14 | 19200 | NB | 9 | 173 |

EP 0 284 379 B1

TABLE 2

| Run No. | First Component | | | MI 280°C 2160 g (g/10 min) | Second Component (parts by weight) | MI 260°C 2160 g of Polyamide Resin Composition (g/10 min) | Flexural Modulus (kg/cm$^2$) | Izod Impact Resistance (kg·cm/cm) | | Heat Distortion Temperature (4.6 kg/cm$^2$) (°C) |
| | Component (A) (parts by weight) | Component (B) (parts by weight) | Component (C) (parts by weight) | | | | | 23°C | -40°C | |
|---|---|---|---|---|---|---|---|---|---|---|
| Compara-tive Example 1 | polyamide 66 240 | copolymer (1) 60 | – | – | – | 25 | 19300 | NB | 12 | 115 |
| Compara-tive Example 2 | " 240 | " 50 | Bondfast® E 10 | – | – | 4 | 19000 | NB | 11 | 185 |
| Compara-tive Example 3 | " 240 | " 50 | " 10 | – | – | 6 | 18200 | 7 | 6 | 216 |
| Compara-tive Example 4 | " 40 | – | " 60 | – | polyamide 66 200 | 45 | 19900 | 10 | 7 | 219 |
| Compara-tive Example 5 | " 240 | copolymer (2) 50 | " 10 | – | – | 4 | 18500 | NB | 11 | 177 |
| Compara-tive Example 6 | " 240 | copolymer (3) 50 | " 10 | – | – | 4 | 18700 | NB | 11 | 181 |

EP 0 284 379 B1

TABLE 2 (cont'd)

| Run No. | First Component | | | | Second Component (parts by weight) | MI 260°C 2160 g of Polyamide Resin Composition (g/10 min) | Flexural Modulus (kg/cm²) | Izod Impact Resistance (kg·cm/cm) | | Heat Distortion Temperature (4.6 kg/cm²) (°C) |
| | Component (A) (parts by weight) | Component (B) (parts by weight) | Component (C) (parts by weight) | MI 280°C 2160 g (g/10 min) | | | | 23°C | -40°C | |
|---|---|---|---|---|---|---|---|---|---|---|
| Comparative Example 7 | polyamide 66 210 | copolymer (1) 60 | Bondfast® E 30 | - | - | 3 | 14300 | NB | 21 | 155 |
| Comparative Example 8 | - | - | - | - | polyamide 66 | (68) | 29000 | 4 | 3 | 231 |
| Comparative Example 9 | polyamide 6 240 | copolymer (2) 60 | - | - | - | 6 | 18000 | 9 | 6 | 163 |
| Comparative Example 10 | " 240 | " 50 | Bondfast® E 10 | - | - | 5 | 18000 | NB | 9 | 161 |
| Comparative Example 11 | - | - | - | - | polyamide 6 | (34) | 26300 | 2 | 1 | 178 |

As described above, the present invention provides a process for producing a polyamide resin composition, which provides moldings well balanced in mechanical properties such as impact resistance and thermal properties and having a good appearance.

It can be said to be an unexpected effect that heat distortion resistance can be improved without decreasing impact resistance by melt kneading by the specified compounding method.

The impact resistant polyamide resin composition provided by the present invention can be easily molded by molding methods commonly used in the usual polyamide resin compositions, such as injection molding and extrusion molding, into products-such as a molding, a film or a sheet which are excellent in balance among physical properties such as impact resistance, stiffness and heat resistance, have a good appearance, which are excellent in uniformity and smoothness.

**Claims**

1.  A process of producing a polyamide resin composition having excellent impact resistance, which process comprises melt kneading (A) 20 to 60 parts by weight of a polyamide resin and (B) 40 to 80 parts by weight of an ethylene copolymer comprising (a) 40 to 90% by weight of an ethylene unit, (b) at least 5% by weight of an $\alpha,\beta$-unsaturated $C_3$-$C_8$ carboxylic acid alkyl ester unit and (c) 0.3 to 10% by weight of a maleic anhydride unit, provided that the ethylene copolymer (B) is used in a greater amount than the polyamide resin (A) or an ethylene copolymer (B) having a smaller melt viscosity than the polyamide resin (A) is used, so as to form a partially crosslinked composition (I) wherein the ethylene copolymer is a continuous phase; and further melt kneading 100 parts by weight of a first component comprising said composition (I) and 50 to 1,000 parts by weight of a second component consisting of a polyamide resin.

2.  A process as claimed in Claim 1, wherein the ethylene copolymer (B) is an ethylene copolymer comprising (a) at least 65% by weight of the ethylene unit, (b) at least 10% by weight of the alkyl ester unit and (c) 1 to 5% by weight of the maleic anhydride unit.

3.  A process as claimed in Claim 1 or 2, wherein the first component consists of a composition (II) which is prepared by adding (C) 0.01 to 20 parts by weight of a polyfunctional compound containing at least two functional groups which are reactive with a carboxyl group, a carboxylic acid anhydride group and an amino group to 100 parts by weight of the composition (I) and partially crosslinking the mixture by melt kneading.

4.  A process as claimed in Claim 3, wherein the polyfunctional compound (C) is a compound containing at least two functional groups selected from an amino group, an epoxy group, a dihydroxazoyl group, a carboxyl group, a carboxylic acid anhydride group and a hydroxyl group.

5.  A process as claimed in Claim 4, wherein the polyfunctional compound (C) is an ethylene copolymer comprising an ethylene unit and an $\alpha,\beta$-unsaturated carboxylic acid glycidyl unit.

6.  A process as claimed in Claim 4, wherein the polyfunctional compound (C) is an ethylene copolymer comprising an ethylene unit, an $\alpha,\beta$-unsaturated carboxylic acid glycidyl unit and an $\alpha,\beta$-unsaturated carboxylic acid

7.  A process as claimed in Claim 4, wherein the polyfunctional compound (C) is an ethylene copolymer comprising an ethylene unit, an $\alpha,\beta$-unsaturated carboxylic acid glycidyl unit and a carboxylic acid vinyl ester unit.

8.  A process as claimed in Claim 3, wherein the polyfunctional compound (C) is 2,2'-(1,3-phenylene)-bis-(2-oxazoline).

9.  A composition produced by the process of any preceding claim, having a multi dispersion state wherein (B) the ethylene copolymer phase containing (A) the polyamide resin particles is dispersed in the second polyamide resin.

**Patentansprüche**

1.  Verfahren zur Herstellung einer Polyamidharzzusammensetzung mit hervorragender Schlagzähigkeit, welches umfaßt das Schmelzkneten von (A) 20 bis 60 Gew.-Teilen eines Polyamidharzes und (B) 40 bis 80 Gew.-Teile eines Ethylencopolymeren, umfassend (a) 40 bis 90 Gew.-% einer Ethyleneinheit, (b) mindestens 5 Gew.-% einer $\alpha,\beta$-ungesättigten $C_3$-$C_8$-Carbonsäurealkylestereinheit und (c) 0,3 bis 10 Gew.-% einer Maleinsäureanhydrideinheit, mit der Maßgabe, daß das Ethylencopolymer (B) in einer größeren Menge als das Polyamidharz (A) verwendet wird, oder ein Ethylencopolymer (B) mit einer kleineren Schmelzviskosität als das Polyamidharz (A) verwendet wird, wobei eine teilweise quervernetzte Zusammensetzung (I) gebildet wird, in der das Ethylencopolymer eine kontinuierliche Phase bildet; und ferner das Schmelzkneten von 100 Gew.-Teilen einer ersten Komponente, die die Zusammensetzung (I) und 50 bis 1000 Gew.-Teile einer zweiten Komponente, bestehend aus Polyamidharz, umfaßt.

2.  Verfahren, wie in Anspruch 1 beansprucht, in dem das Ethylencopolymer (B) ein Ethylencopolymer ist, das (a) mindestens 65 Gew.-% der Ethyleneinheit, (b) mindestens 10 Gew.-% der Alkylestereinheit und (c) 1 bis 5 Gew.-% der Maleinsäureanhydrideinheit umfaßt.

3.  Verfahren, wie in Anspruch 1 oder 2 beansprucht, in dem die erste Komponente aus einer Zusammensetzung (II) besteht, die durch Versetzen (C) von 100 Gew.-Teilen einer Zusammensetzung (I) mit 0,01 bis 20 Gew.-Teilen einer polyfunktionellen Verbindung, die mindestens zwei funktionelle Gruppen enthält, die mit einer Carboxylgruppe, einer Carbonsäureanhydridgruppe und einer Aminogruppe reaktiv sind, und durch teilweises Vernetzen des Gemisches durch Schmelzkneten hergestellt wird.

4.  Verfahren, wie in Anspruch 3 beansprucht, in dem die polyfunktionelle Verbindung (C) eine Verbindung ist, die mindestens zwei funktionelle Gruppen aus der Reihe Aminogruppe, Epoxygruppe, Dihydroxazoylgruppe, Carboxylgruppe, Carbonsäureanhydridgruppe und Hydroxylgruppe enthält.

5.  Verfahren, wie in Anspruch 4 beansprucht, in dem die polyfunktionelle Gruppe (C) ein Ethylencopolymer ist, das eine Ethyleneinheit und eine $\alpha,\beta$-ungesättigte Carbonsäureglycidyleinheit umfaßt.

6.  Verfahren, wie in Anspruch 4 beansprucht, in dem die polyfunktionelle Verbindung (C) ein Ethylencopolymer ist, das eine Ethyleneinheit, eine $\alpha,\beta$-ungesättigte Carbonsäureglycidyleinheit und eine $\alpha,\beta$-ungesättigte Carbonsäurealkylestereinheit umfaßt.

7.  Verfahren, wie in Anspruch 4 beansprucht, in dem die polyfunktionelle Verbindung (C) ein Ethylencopolymer ist, das eine Ethyleneinheit, eine $\alpha,\beta$-ungesättigte Carbonsäureglycidyleinheit und eine Carbonsäurevinylestereinheit umfaßt.

8.  Verfahren, wie in Anspruch 3 beansprucht, in dem die polyfunktionelle Verbindung (C) 2,2'-(1,3-Phenylen)-bis(2-oxazolin) ist.

9.  Zusammensetzung, hergestellt nach dem Verfahren einer der vorstehenden Ansprüche mit einem Multidispersionszustand, in der (B) die Ethylencopolymerphase, die (A) die Polyamidharzteilchen enthält, in dem zweiten Polyamidharz dispergiert ist.

**Revendications**

1.  Procédé pour produire une composition de résine de polyamide ayant une excellente résistance à l'impact, ce procédé comprenant le malaxage au fondu (A) de 20 à 60 parties en poids d'une résine de polyamide, et (B) de 40 à 80 parties en poids d'un copolymère de l'éthylène comprenant (a) 40 à 90 % en poids d'un motif éthylène, (b) au moins 5 % en poids d'un ester alkylique d'acide carboxylique en $C_3$-$C_8$, insaturé en $\alpha$-$\beta$, et (c) 0,3 à 10 % en poids d'un motif anhydride maléique, à la condition d'utiliser le copolymère de l'éthylène (B) en une plus grande quantité que la résine de polyamide (A) ou d'utiliser un copolymère de l'éthylène (B) ayant une plus faible viscosité, à l'état fondu, que celle de la résine de polyamide (A), de façon à former une composition (I) partiellement réticulée, dans laquelle le copolymère de l'éthylène constitue une phase continue ; puis le malaxage au fondu de 100 parties en poids d'un premier constituant, comprenant ladite composition (I) et de 50 à 1 000 parties en poids d'un second constituant formé par une résine de polyamide.

2.  Procédé tel que revendiqué à la revendication 1, dans lequel le copolymère de l'éthylène (B) est un copolymère de l'éthylène comprenant (a) au moins 65 % en poids du motif éthylène, (b) au moins 10 % en poids du motif ester alkylique et (c) 1 à 5 % en poids du motif anhydride maléique.

3.  Procédé tel que revendiqué à la revendication 1 ou 2, dans lequel le premier constituant consiste en une composition (II) que l'on prépare en ajoutant (C) 0,01 à 20 parties en poids d'un composé polyfonctionnel, contenant au moins deux groupes fonctionnels pouvant réagir avec un groupe carboxyle, un groupe anhydride d'acide carboxylique et un groupe amino, à 100 parties en poids de la composition (I) et en soumettant le mélange à réticulation partielle, par malaxage au fondu.

4. Procédé tel que revendiqué à la revendication 3, dans lequel le composé polyfonctionnel (C) est un composé contenant au moins deux groupes fonctionnels choisis parmi un groupe amino, un groupe époxy, un groupe dihydroxazoyle, un groupe carboxyle, un groupe anhydride d'acide carboxylique et un groupe hydroxyle.

5. Procédé tel que revendiqué à la revendication 4, dans lequel le composé polyfonctionnel (C) est un copolymère de l'éthylène comprenant un motif éthylène et un motif ester glycidylique d'acide carboxylique insaturé en $\alpha$-$\beta$.

6. Procédé tel que revendiqué à la revendication 4, dans lequel le composé polyfonctionnel (C) est un copolymère de l'éthylène comprenant un motif éthylène, un motif ester glycidylique d'acide carboxylique insaturé en $\alpha$-$\beta$ et un motif ester alkylique d'acide carboxylique insaturé en $\alpha$-$\beta$.

7. Procédé tel que revendiqué à la revendication 4, dans lequel le composé polyfonctionnel (C) est un copolymère de l'éthylène comprenant un motif éthylène, un motif ester glycidylique d'acide carboxylique insaturé en $\alpha$-$\beta$ et un motif ester vinylique d'acide carboxylique.

8. Procédé tel que revendiqué à la revendication 3, dans lequel le composé polyfonctionnel (C) est la 2,2'-(1,3-phénylène)-bis(2-oxazoline).

9. Composition produite par le procédé selon l'une quelconque des revendications précédentes, présentant un état de dispersion multiple dans lequel (B), la phase de copolymère d'éthylène contenant (A) les particules de résine de polyamide, est dispersée dans la seconde résine de polyamide.